# EUROPEAN PATENT APPLICATION

(11) **EP 3 168 076 A1**
(43) Date of publication of application: **17.05.2017**
(21) Application number: 15818685.8
(22) Date of filing: 24.06.2015
(51) Int. Cl.: B60K 17/10, F16H 61/4017, F16H 61/478

(54) **HYDRAULIC DRIVE SYSTEM**

(30) Priority: 11.07.2014 JP 2014143485
(71) Applicant: KYB Corporation, Tokyo 105-6111 (JP)
(72) Inventor: INADA, Takanori, Tokyo 105-6111 (JP); IWANAJI, Tetsuya, Tokyo 105-6111 (JP)
(74) Representative: Grünecker Patent- und Rechtsanwälte PartG mbB
(86) International application number: PCT/JP2015/068235
(87) International publication number: WO 2016/006454

(57) **Abstract**

A hydraulic drive system includes: a first hydraulic motor (12) and a second hydraulic motor (22) configured to be driven by working oils respectively discharged from a first hydraulic pump (11) and a second hydraulic pump (21) to transmit powers to different drive wheels of right and left drive wheels (2, 3); a first pump control unit (13) and a second pump control unit (23) configured to control discharge volumes and discharge directions of the first hydraulic pump (11) and the second hydraulic pump (21); a signal pressure generating unit (40) configured to generate a signal pressure for adjusting command pressures to control the first pump control unit (13) and the second pump control unit (23) in accordance with the sum of discharge pressures of the first hydraulic pump (11) and the second hydraulic pump (21); and a first pressure adjusting unit (50) and a second pressure adjusting unit (60) configured to adjust the command pressures in accordance with the signal pressure.

## Description

### TECHNICAL FIELD

The present invention relates to a liquid pressure drive system that transmits power by a hydraulic pressure.

### BACKGROUND ART

Heretofore, a liquid pressure drive system as disclosed in JP2003-63266A, for example, is known as a liquid pressure drive system.

JP2003-63266A discloses a two-pump and two-motor type hydraulic drive system including two right and left HSTs in each of which a variable displacement hydraulic pump and a variable displacement hydraulic motor are fluid-connected by a closed circuit.

### SUMMARY OF INVENTION

In such a liquid pressure drive system to be mounted in a vehicle, there is a fear that when large resistance is added to wheels during traveling of the vehicle, discharge pressures of the liquid pressure pumps are boosted and a large load is applied to a drive source.

It is an object of the present invention to provide a liquid pressure drive system capable of suppressing a load applied to a drive source.

According to an aspect of the present invention, a liquid pressure drive system includes: a first liquid pressure pump and a second liquid pressure pump configured to be driven by power of a drive source, each of the first and second liquid pressure pumps being capable of changing a discharge volume and a discharge direction of a working liquid; a first hydraulic motor configured to be driven by the working liquid discharged from the first liquid pressure pump, the first liquid pressure motor being configured to transmit the power to one of right and left drive wheels; a second liquid pressure motor configured to be driven by the working liquid discharged from the second liquid pressure pump, the second liquid pressure motor being configured to transmit the power to the other of the right and left drive wheels; a first pump control unit configured to control the discharge volume and the discharge direction of the first liquid pressure pump in accordance with a first command pressure, the first command pressure being generated in response to an operation of a worker; a second pump control unit configured to control the discharge volume and the discharge direction of the second liquid pressure pump in accordance with a second command pressure, the second command pressure being generated in response to an operation of the worker; a signal pressure generating unit configured to generate a signal pressure for adjusting the first command pressure and the second command pressure in accordance with a sum of discharge pressures of the first liquid pressure pump and the second liquid pressure pump; a first pressure adjusting unit configured to adjust the first command pressure in accordance with the signal pressure generated by the signal pressure generating unit; and a second pressure adjusting unit configured to adjust the second command pressure in accordance with the signal pressure generated by the signal pressure generating unit.

### BRIEF DESCRIPTION OF DRAWINGS

Fig. 1 is a hydraulic circuit diagram of a liquid pressure drive system according to a first embodiment of the present invention.
Fig. 2 is a hydraulic circuit diagram of a liquid pressure drive system according to a second embodiment of the present invention.
Fig. 3 is a hydraulic circuit diagram of a liquid pressure drive system according to a comparative example of the present invention.

### DESCRIPTION OF EMBODIMENTS

Hereinafter, embodiments of the present invention will be described with reference to the drawings.

A liquid pressure drive system includes a hydrostatic transmission (HST) configured to circulate a working liquid between a liquid pressure pump and a liquid pressure motor and transmit power to steplessly control the velocity ratio of the liquid pressure motor with respect to the liquid pressure pump. The liquid pressure drive system is mounted in a working vehicle such as a forklift or the like. The liquid pressure drive system is to control traveling of the vehicle by controlling the power transmitted from a drive source to right and left drive wheels (such as tires and crawlers). Hereinafter, hydraulic drive systems 100, 200 in which a working oil is used as the working liquid will be described. The working liquid is not limited to the working oil but other liquid such as a water soluble alternative liquid may be used.

### (First Embodiment)

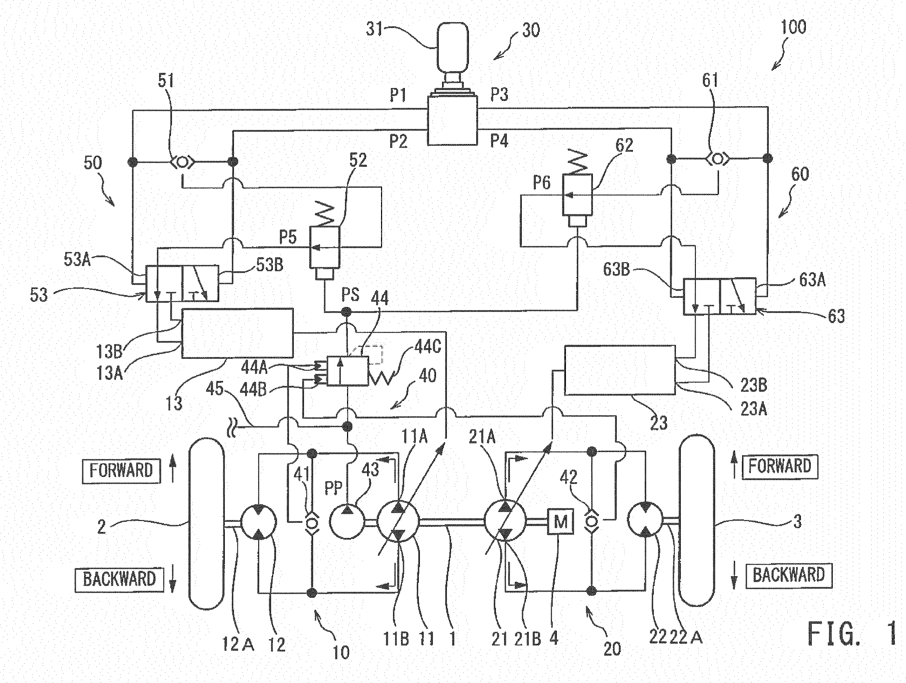

Firstly, with reference to Fig. 1, the entire configuration of the hydraulic drive system 100 according to a first embodiment of the present invention will be described.

As shown in Fig. 1, the hydraulic drive system 100 includes a first hydraulic pump 11 serving as a first liquid pressure pump and a second hydraulic pump 21 serving as a second liquid pressure pump, the hydraulic pumps 11, 21 to be driven by power of an engine 4 serving as a drive source, the power being transmitted via a common drive shaft 1, the hydraulic pumps 11, 21 being capable of changing the discharge volumes and the discharge directions of working oils, a first hydraulic motor 12 serving as a first liquid pressure motor to be driven by the working oil discharged from the first hydraulic pump 11, the first hydraulic motor 12 being configured to transmit the power to a left drive wheel 2 of right and left drive wheels 2, 3, a second hydraulic motor 22 serving as a second liquid pressure motor to be driven by the working oil discharged from the second hydraulic pump 21, the second hydraulic motor 22 being configured to transmit the power to the right drive wheel 3 of the right and left drive wheels 2, 3, a first pump control unit 13 configured to control the discharge volume and the discharge direction of the first hydraulic pump 11 in accordance with first command pressures P1, P2 generated in response to an operation of a worker, and a second pump control unit 23 configured to control the discharge volume and the discharge direction of the second hydraulic pump 21 in accordance with second command pressures P3, P4 generated in response to an operation of the worker.

The first hydraulic pump 11 and the second hydraulic pump 21 are variable displacement swash-plate piston pumps respectively having a pair of supply and discharge ports 11A, 11B and a pair of supply and discharge ports 21A, 21B. The first hydraulic pump 11 suctions the working oil from one of the pair of supply and discharge ports 11A, 11B, and discharges the working oil from the other port. The second hydraulic pump 21 suctions the working oil from one of the pair of supply and discharge ports 21A, 21B, and discharges the working oil from the other port. That is, each of the first hydraulic pump 11 and the second hydraulic pump 21 has two discharge directions. A swash plate of each of the first hydraulic pump 11 and the second hydraulic pump 21 is provided to be inclined in the forward direction and in the backward direction from a neutral position. Each of the first hydraulic pump 11 and the second hydraulic pump 21 discharges the working oil in the discharge direction by the discharge volume in accordance with an angle of the swash plate. In other words, the discharge direction of each of the first hydraulic pump 11 and the second hydraulic pump 21 is controlled in accordance with the swash plate angle.

The first hydraulic motor 12 and the second hydraulic motor 22 are respectively connected to the first hydraulic pump 11 and the second hydraulic pump 21 by closed circuits. A drive shaft 12A of the first hydraulic motor 12 is coupled to the left drive wheel 2. Driven by the working oil supplied from the first hydraulic pump 11, the first hydraulic motor 12 transmits the power of the engine 4 to the left drive wheel 2. A drive shaft 22A of the second hydraulic motor 22 is coupled to the right drive wheel 3. Driven by the working oil supplied from the second hydraulic pump 21, the second hydraulic motor 22 transmits the power of the engine 4 to the right drive wheel 3. In such a way, the first hydraulic motor 12 and the second hydraulic motor 22 respectively transmit the power of the engine 4 to different drive wheels of the right and left drive wheels 2, 3.

The first pump control unit 13 and the second pump control unit 23 are servo-regulators configured to change the swash plate inclination angles of the first hydraulic pump 11 and the second hydraulic pump 21 in accordance with inputted pressures. A first forward rotation port 13A and a first backward rotation port 13B are provided in the first pump control unit 13. A second forward rotation port 23A and a second backward rotation port 23B are provided in the second pump control unit 23.

In a case where the working oils are guided to the first and second forward rotation ports 13A, 23A, the first pump control unit 13 and the second pump control unit 23 respectively incline the swash plates of the first hydraulic pump 11 and the second hydraulic pump 21 in the forward direction in accordance with the pressures of the working oils. Thereby, the discharge direction of each of the first hydraulic pump 11 and the second hydraulic pump 21 is controlled to be one of the two discharge directions.

In a case where the working oils are guided to the first and second backward rotation ports 13B, 23B, the first pump control unit 13 and the second pump control unit 23 respectively incline the swash plates of the first hydraulic pump 11 and the second hydraulic pump 21 in the backward direction in accordance with the pressures of the working oils. Thereby, the discharge direction of each of the first hydraulic pump 11 and the second hydraulic pump 21 is controlled to be the other of the two discharge directions.

In such a way, the first pump control unit 13 and the second pump control unit 23 respectively control the inclining directions of the swash plates of the first hydraulic pump 11 and the second hydraulic pump 21, that is, the discharge directions in accordance with the ports to which the working oils are guided. The first pump control unit 13 and the second pump control unit 23 respectively control the swash plate inclination angles, that is, the discharge volumes of the first hydraulic pump 11 and the second hydraulic pump 21 in accordance with the pressures of the working oils guided to the ports.

As described above, in the hydraulic drive system 100, the first hydraulic pump 11, the first hydraulic motor 12, and the first pump control unit 13 form one HST (hereinafter, referred to as the "first power transmission unit 10"). Similarly, the second hydraulic pump 21, the second hydraulic motor 22, and the second pump control unit 23 form one HST (hereinafter, referred to as the "second power transmission unit 20"). That is, the hydraulic drive system 100 is a two-pump and two-motor type hydraulic drive system including a pair of hydraulic pumps and a pair of oil pressure motors, and the right and left drive wheels 2, 3 are respectively independently controlled by the first power transmission unit 10 and the second power transmission unit 20.

The hydraulic drive system 100 further includes an operation unit 30 configured to generate the first command pressures P1, P2 and the second command pressures P3, P4 for respectively commanding the first pump control unit 13 and the second pump control unit 23 to control in accordance with inputted operations, a signal pressure generating unit 40 configured to generate a signal pressure PS for adjusting the first command pressures P1, P2 and the second command pressures P3, P4 in accordance with the sum of discharge pressures of the working oils discharged from the first hydraulic pump 11 and the second hydraulic pump 21, a first pressure adjusting unit 50 configured to adjust the first command pressures P1, P2 for commanding the first pump control unit 13 to control in accordance with the signal pressure PS generated by the signal pressure generating unit 40, and a second pressure adjusting unit 60 configured to adjust the second command pressures P3, P4 for commanding the second pump control unit 23 to control in accordance with the signal pressure PS generated by the signal pressure generating unit 40.

The operation unit 30 has a joystick 31 provided for example in a driver's seat to be operated by the worker. The operation unit 30 generates and outputs the two first command pressures P1, P2 in two lines for controlling the left drive wheel 2 and the two second command pressures P3, P4 in two lines for controlling the right drive wheel 3 in accordance with an operation input of the worker such as straight-forward movement and turning inputted from the joystick 31. The operation unit 30 is not limited to the joystick 31 but the operation input may be made from for example a handle or the like.

The signal pressure generating unit 40 has a first discharge pressure selecting valve 41 provided between the first hydraulic pump 11 and the first hydraulic motor 12, the first discharge pressure selecting valve being configured to select a higher one from the working oil supplied to and discharged from the first hydraulic pump 11, a second discharge pressure selecting valve 42 provided between the second hydraulic pump 21 and the second hydraulic motor 22, the second discharge pressure selecting valve being configured to select a higher one from the working oil supplied to and discharged from the second hydraulic pump 21, a pilot pump 43 to be driven by the power of the engine 4 transmitted via the drive shaft 1, the pilot pump being configured to suction the working oil from a tank (not shown) and to generate a signal source pressure PP, and a signal pressure adjusting valve 44 configured to adjust the signal source pressure PP in accordance with the sum of the discharge pressures of the working oils respectively discharged from the first hydraulic pump 11 and the second hydraulic pump 21 and to generate the signal pressure PS.

The first discharge pressure selecting valve 41 and the second discharge pressure selecting valve 42 are shuttle valves to which the supplied/discharged working oils are respectively guided from the first hydraulic pump 11 and the second hydraulic pump 21. Each of the shuttle valves is configured to select the high-pressure-side working oil of the guided supplied/discharged working oils. Parts of the high-pressure-side working oils selected by the first discharge pressure selecting valve 41 and the second discharge pressure selecting valve 42, that is, parts of the working oils discharged from the first hydraulic pump 11 and the second hydraulic pump 21 are respectively guided to the signal pressure adjusting valve 44 as pilot pressures.

The signal pressure adjusting valve 44 is a pressure reduction valve that reduces and adjusts the pressure of the passing working oil in accordance with an opening degree of a main valve (not shown). The signal pressure adjusting valve 44 has a pair of pilot ports 44A, 44B to which the discharge pressure of the first hydraulic pump 11 and the discharge pressure of the second hydraulic pump 21 are respectively guided, and a return spring 44C configured to bias the main valve in the direction in which the opening degree is decreased.

In the signal pressure adjusting valve 44, by balance between the sum of the discharge pressure of the first hydraulic pump 11 and the discharge pressure of the second hydraulic pump 21 respectively guided from the pair of pilot ports 44A, 44B and bias force of the return spring 44C, the opening degree of the main valve is changed and the pressure reduction ratio is set. When the sum of the discharge pressures of the first hydraulic pump 11 and the second hydraulic pump 21 is increased, the main valve is moved by the discharge pressure, the opening degree is increased, and the pressure reduction ratio of the signal pressure adjusting valve 44 is decreased. Meanwhile, when the sum of the discharge pressures of the first hydraulic pump 11 and the second hydraulic pump 21 is decreased, the main valve is moved by the return spring 44C, the opening degree is decreased, and the pressure reduction ratio of the signal pressure adjusting valve 44 is increased. In such a way, the signal pressure adjusting valve 44 sets the pressure reduction ratio to reduce the pressure of the passing working oil in accordance with the sum of the discharge pressures of the first hydraulic pump 11 and the second hydraulic pump 21. The working oil not guided to the signal pressure adjusting valve 44 is circulated to the tank through a return passage 45.

The signal source pressure PP outputted from the pilot pump 43 is guided to the signal pressure adjusting valve 44. The signal pressure adjusting valve 44 reduces the signal source pressure PP by the pressure reduction ratio set in accordance with the sum of the discharge pressures of the first hydraulic pump 11 and the second hydraulic pump 21, thereby generating the signal pressure PS.

The first pressure adjusting unit 50 has a first command pressure selecting valve 51 serving as a first higher pressure selecting valve configured to select higher one from the two first command pressures P1, P2 for commanding control of the left drive wheel 2, and a first command pressure adjusting valve 52 configured to adjust the higher first command pressure P1, P2 selected by the first command pressure selecting valve 51 and to guide the higher first command pressure to the first pump control unit 13. The first command pressure selecting valve 51 is a shuttle valve that guides the higher one of the first command pressures P1, P2 guided to the two input ports to an output port.

The first command pressure adjusting valve 52 is a pressure reduction valve that reduces the pressure of the passing working oil. The signal pressure PS generated by the signal pressure adjusting valve 44 is guided to the first command pressure adjusting valve 52 as a pilot pressure to set the pressure reduction ratio of the first command pressure adjusting valve 52. The first command pressure adjusting valve 52 adjusts the first command pressure P1 or the first command pressure P2 by the pressure reduction ratio set in accordance with the signal pressure PS. Hereinafter, the first command pressure P1 or the first command pressure P2 adjusted by the first command pressure adjusting valve 52 will be called as the "control pressure P5". By guiding the control pressure P5 adjusted by the first command pressure adjusting valve 52 through a first switching valve 53 to be described later, the first pump control unit 13 changes the swash plate angle of the first hydraulic pump 11 and controls the discharge volume and the discharge direction.

The second pressure adjusting unit 60 has a second command pressure selecting valve 61 serving as a second higher pressure selecting valve configured to select higher one from the two second command pressures P3, P4 for commanding control of the right drive wheel 3, and a second command pressure adjusting valve 62 configured to adjust the higher second command pressure P3, P4 selected by the second command pressure selecting valve 61 and to guide the higher second command pressure to the second pump control unit 23. The second command pressure selecting valve 61 is a shuttle valve that guides the higher one of the second command pressures P3, P4 guided to the two input ports to an output port.

The second command pressure adjusting valve 62 is a pressure reduction valve that reduces the pressure of the passing working oil. The signal pressure PS generated by the signal pressure adjusting valve 44 is guided to the second command pressure adjusting valve 62 as a pilot pressure to set the pressure reduction ratio of the second command pressure adjusting valve 62. The second command pressure adjusting valve 62 adjusts the second command pressure P3 or the second command pressure P4 by the pressure reduction ratio set in accordance with the signal pressure PS. Hereinafter, the second command pressure P3 or the second command pressure P4 adjusted by the second command pressure adjusting valve 62 will be called as the "control pressure P6". By guiding the control pressure P6 adjusted by the second command pressure adjusting valve 62 through a second switching valve 63 to be described later, the second pump control unit 23 changes the swash plate angle of the second hydraulic pump 21 and controls the discharge volume and the discharge direction.

The first switching valve 53 to be actuated by a pressure difference between the two first command pressures P1, P2 is provided between the first command pressure adjusting valve 52 and the first pump control unit 13. The second switching valve 63 to be actuated by a pressure difference between the two second command pressures P3, P4 is provided between the second command pressure adjusting valve 62 and the second pump control unit 23. The control pressure P5 and the control pressure P6 adjusted by the first command pressure adjusting valve 52 and the second command pressure adjusting valve 62 are respectively guided to the first pump control unit 13 and the second pump control unit 23 via the first switching valve 53 and the second switching valve 63.

The first switching valve 53 has a first position 53A at which the control pressure P5 is guided to the first forward rotation port 13A of the first pump control unit 13 and the first backward rotation port 13B is blocked, and a second position 53B at which the first forward rotation port 13A of the first pump control unit 13 is blocked and the control pressure P5 is guided to the first backward rotation port 13B. The control pressure P5 adjusted by the first pressure adjusting unit 50 is selectively guided to the first forward rotation port 13A or the first backward rotation port 13B of the first pump control unit 13 by switching of the first switching valve 53.

As well as the first switching valve 53, the second switching valve 63 has a first position 63A at which the control pressure P6 is guided to the second forward rotation port 23A of the second pump control unit 23 and the second backward rotation port 23B is blocked, and a second position 63B at which the second forward rotation port 23A of the second pump control unit 23 is blocked and the control pressure P6 is guided to the second backward rotation port 23B. The control pressure P6 adjusted by the second pressure adjusting unit 60 is selectively guided to the second forward rotation port 23A or the second backward rotation port 23B of the second pump control unit 23 by switching of the second switching valve 63.

The two first command pressures P1, P2 and the two second command pressures P3, P4 are respectively guided to the first switching valve 53 and the second switching valve 63 as the pilot pressures for switching the positions. The first switching valve 53 and the second switching valve 63 determine whether the first pump control unit 13 and the second pump control unit 23 move the swash plates of the first hydraulic pump 11 and the second hydraulic pump 21 in the forward direction or in the backward direction by the pressure difference between the first command pressures P1, P2 guided to the first switching valve 53 as the pilot pressures and by the pressure difference between the second command pressures P3, P4 guided to the second switching valve 63 as the pilot pressures.

Next, operations of the hydraulic drive system 100 will be described.

In a working vehicle in which the hydraulic drive system 100 is mounted, the rotation number of the engine 4 is controlled in accordance with the stepping quantity of an accelerator pedal (not shown), and a traveling state is controlled by an operation of the joystick 31 of the operation unit 30. In the working vehicle, the rotating direction and the rotation velocity ratio of the right and left drive wheels 2, 3 are controlled in accordance with the inclining direction (operating direction) of the joystick 31, and traveling operations such as straight-forward movement, backward movement, and turning are controlled.

When the worker operates the joystick 31, the two first command pressures P1, P2 for controlling the left drive wheel 2 and the two second command pressures P3, P4 for controlling the right drive wheel 3 are respectively generated in accordance with the operation input and outputted. By respectively independently controlling the transmission gear ratio of the power of the engine 4 transmitted to the right and left drive wheels 2, 3 in accordance with the first command pressures P1, P2 and the second command pressures P3, P4, the traveling state of the vehicle can be controlled. For example, by rotating the right and left drive wheels 2, 3 in the same direction by the same rotation number, the vehicle moves forward or backward. By rotating the right and left drive wheels 2, 3 in the same direction by the different rotation numbers, the vehicle turns. By changing the rotation numbers of the right and left drive wheels 2, 3, the velocity of the forward movement and the backward movement, the turning velocity, and a turning radius can be controlled.

Specifically, in a case where the vehicle is moved forward, the first command pressures P1, P2 and the second command pressures P3, P4 are outputted from the joystick 31 in such a manner that the right and left drive wheels 2, 3 are rotated in the forward direction at the same rotation velocity, that is, the rotation velocity ratio of the right and left drive wheels 2, 3 becomes 1:1. In a case where the vehicle is turned leftward while being moved forward, the first command pressures P1, P2 and the second command pressures P3, P4 are outputted from the joystick 31 in such a manner that the rotation velocity in the forward direction of the left drive wheel 2 becomes smaller than the rotation velocity in the forward direction of the right drive wheel 3. By outputting the first command pressures P1, P2 and the second command pressures P3, P4 in such a manner that the right and left drive wheels 2, 3 are rotated in the opposite directions to each other, the vehicle can be turned on its own axis.

In the hydraulic drive system 100, the first power transmission unit 10 and the second power transmission unit 20 include the same configurations, and the first pressure adjusting unit 50 and the second pressure adjusting unit 60 include the same configurations. Operations of the first power transmission unit 10 and the first pressure adjusting unit 50 and operations of the second power transmission unit 20 and the second pressure adjusting unit 60 are the same except that the drive wheels to be controlled are different. Therefore, hereinafter, the first power transmission unit 10 and the first pressure adjusting unit 50 that control the left drive wheel 2 will be mainly and specifically described. Description of the second power transmission unit 20 and the second pressure adjusting unit 60 will be omitted.

The higher pressure of the two first command pressures P1, P2 outputted from the operation unit 30 for commanding the control of the left drive wheel 2 is selected by the first command pressure selecting valve 51, and the higher command pressure of the first command pressures P1, P2 is inputted to the first command pressure adjusting valve 52.

The higher pressure of the first command pressures P1, P2 inputted to the first command pressure adjusting valve 52 is reduced in accordance with the pressure reduction ratio of the first command pressure adjusting valve 52, and adjusted to be the control pressure P5. The control pressure P5 adjusted by the first command pressure adjusting valve 52 is selectively guided to the first forward rotation port 13A or the first backward rotation port 13B of the first pump control unit 13 in accordance with the position of the first switching valve 53 set in accordance with the pressure difference between the two first command pressures P1, P2.

Specifically speaking, for example, when the first command pressure P1 is the higher pressure of the two first command pressures P1, P2 caused by the operation input of the operation unit 30 by the worker, the first command pressure P1 is selected by the first command pressure selecting valve 51 and guided to the first command pressure adjusting valve 52. The first switching valve 53 is switched to the first position 53A by the higher first command pressure P1. The first command pressure P1 is reduced by the pressure reduction ratio of the first command pressure adjusting valve 52 and adjusted to be the control pressure P5. The control pressure P5 is guided to the first forward rotation port 13A of the first pump control unit 13 through the first switching valve 53. That is, the first command pressure P1 is a first forward rotation command pressure to switch the first switching valve 53 in such a manner that the control pressure P5 is inputted to the first forward rotation port 13A provided in the first pump control unit 13.

In this case, the first pump control unit 13 moves the swash plate of the first hydraulic pump 11 by an inclination angle in the forward direction in accordance with the magnitude of the control pressure P5 guided to the first forward rotation port 13A. Thereby, the first hydraulic pump 11 discharges the working oil from the supply and discharge port 11A on one side. That is, the discharge direction of the first hydraulic pump 11 is controlled to be one of the two discharge directions. The first hydraulic pump 11 discharges the working oil by an inclination angle amount of the swash plate, that is, the discharge volume in accordance with the magnitude of the control pressure P5.

Conversely, in a case where the first command pressure P2 is the higher pressure of the two first command pressures P1, P2, the first command pressure P2 is selected by the first command pressure selecting valve 51 and guided to the first command pressure adjusting valve 52. The first switching valve 53 is switched to the second position 53B by the higher first command pressure P2. The first command pressure P2 is reduced by the pressure reduction ratio of the first command pressure adjusting valve 52 and adjusted to be the control pressure P5. The control pressure P5 is guided to the first backward rotation port 13B of the first pump control unit 13 through the first switching valve 53. That is, the first command pressure P2 is a first backward rotation command pressure to switch the first switching valve 53 in such a manner that the control pressure P5 is inputted to the first backward rotation port 13B provided in the first pump control unit 13.

In this case, the first pump control unit 13 moves the swash plate of the first hydraulic pump 11 by an inclination angle in the backward direction in accordance with the magnitude of the control pressure P5 guided to the first backward rotation port 13B. Thereby, the first hydraulic pump 11 discharges the working oil from the supply and discharge port 11B on the other side. That is, the discharge direction of the first hydraulic pump 11 is controlled to be the other of the two discharge directions. The first hydraulic pump 11 discharges the working oil by an inclination angle amount of the swash plate, that is, the discharge volume in accordance with the magnitude of the control pressure P5.

In such a way, in the first hydraulic pump 11 of the hydraulic drive system 100, in a case where the first command pressure P1 is the higher pressure, the swash plate angle is controlled in the forward rotation direction in accordance with the magnitude of the first command pressure P1. In the first hydraulic pump 11, in a case where the first command pressure P2 is the higher pressure, the swash plate angle is controlled in the backward rotation direction in accordance with the magnitude of the first command pressure P2.

By controlling the first hydraulic pump 11 and driving the first hydraulic motor 12 in accordance with the working oil discharged from the first hydraulic pump 11 as described above, the power of the engine 4 is transmitted to the left drive wheel 2 coupled to the first hydraulic motor 12 in accordance with the magnitude of the first command pressure P1 or the first command pressure P2 outputted from the operation unit 30.

Similarly, in the second hydraulic pump 21 of the hydraulic drive system 100, in a case where the second command pressure P3 is the higher pressure, the swash plate angle is controlled in the forward rotation direction in accordance with the magnitude of the second command pressure P3. In the second hydraulic pump 21, in a case where the second command pressure P4 is the higher pressure, the swash plate angle is controlled in the backward rotation direction in accordance with the magnitude of the second command pressure P4. That is, the second command pressure P3 is a second forward rotation command pressure, and the second command pressure P4 is a second backward rotation command pressure.

By controlling the second hydraulic pump 21 in such a way and driving the second hydraulic motor 22 in accordance with the working oil discharged from the second hydraulic pump 21, the power of the engine 4 is transmitted to the right drive wheel 3 coupled to the second hydraulic motor 22 in accordance with the magnitude of the second command pressure P3 or the second command pressure P4 outputted from the operation unit 30.

In the hydraulic drive system 100, only one of the first command pressure P1 and the first command pressure P2 for commanding the control by the first pump control unit 13 may be selectively outputted from the operation unit 30. In other words, any one pressure of the first command pressure P1 and the first command pressure P2 may be outputted from the operation unit 30 as zero. Similarly, any one pressure of the second command pressure P3 and the second command pressure P4 for commanding the control by the second pump control unit 23 may be outputted from the operation unit 30 as zero. In such a case, the hydraulic drive system 100 is also operated similarly to the above operations. How the operation unit 30 generates the command pressure is set arbitrarily in accordance with the operation input.

Next, operations of the signal pressure generating unit 40 of the hydraulic drive system 100 will be described.

The discharge pressure of the working oil discharged from the first hydraulic pump 11 by the first discharge pressure selecting valve 41 and the discharge pressure of the working oil discharged from the second hydraulic pump 21 by the second discharge pressure selecting valve 42 are guided to the signal pressure adjusting valve 44 as the pilot pressures. In the signal pressure adjusting valve 44, the pressure reduction ratio is set in accordance with the sum of the discharge pressures of the first hydraulic pump 11 and the second hydraulic pump 21.

The signal source pressure PP discharged from the pilot pump 43 is guided to the signal pressure adjusting valve 44 as an input pressure. By reducing and adjusting the signal source pressure PP in accordance with the pressure reduction ratio set in accordance with the sum of the discharge pressures of the first hydraulic pump 11 and the second hydraulic pump 21, the signal pressure PS is generated.

The signal pressure PS generated by the signal pressure adjusting valve 44 is respectively guided as the pilot pressure to set the pressure reduction ratios of the first command pressure adjusting valve 52 and the second command pressure adjusting valve 62. By the signal pressure PS guided in such a way, the pressure reduction ratios of the first command pressure adjusting valve 52 and the second command pressure adjusting valve 62 for respectively generating the control pressure P5 and the control pressure P6 from the first command pressures P1, P2 and the second command pressures P3, P4 are set. That is, the control pressure P5 and the control pressure P6 guided to the first pump control unit 13 and the second pump control unit 23 are adjusted in accordance with the sum of the discharge pressures of the first hydraulic pump 11 and the second hydraulic pump 21.

In a case where loads are applied to the right and left drive wheels 2, 3 at the same time, the respective discharge pressures of the first hydraulic pump 11 and the second hydraulic pump 21 are boosted in accordance with the loads. When the discharges pressures boosted in such a way are guided to the signal pressure adjusting valve 44, the pressure reduction ratio of the signal pressure adjusting valve 44 is set in accordance with the sum of the boosted discharge pressures. That is, by boosting of the discharge pressures by the loads, the pressure reduction ratio of the signal pressure adjusting valve 44 is lowered, and the signal pressure PS guided to the first command pressure adjusting valve 52 and the second command pressure adjusting valve 62 is increased. Therefore, the pressure reduction ratios of the first command pressure adjusting valve 52 and the second command pressure adjusting valve 62 are increased, and the magnitude of the control pressure P5 and the control pressure P6 adjusted by the first command pressure adjusting valve 52 and the second command pressure adjusting valve 62 is reduced.

By guiding the control pressure P5 and the control pressure P6 lowered by the loads applied to the right and left drive wheels 2, 3, the first pump control unit 13 and the second pump control unit 23 respectively control the first hydraulic pump 11 and the second hydraulic pump 21 such that the respective swash plate angles are reduced and the discharge volumes are decreased. By decreasing the respective discharge volumes of the first hydraulic pump 11 and the second hydraulic pump 21, the loads applied to the first hydraulic pump 11 and the second hydraulic pump 21 are suppressed. In such a way, in the hydraulic drive system 100, by suppressing the loads applied to the first hydraulic pump 11 and the second hydraulic pump 21, output control of suppressing a load of the engine 4 can be performed.

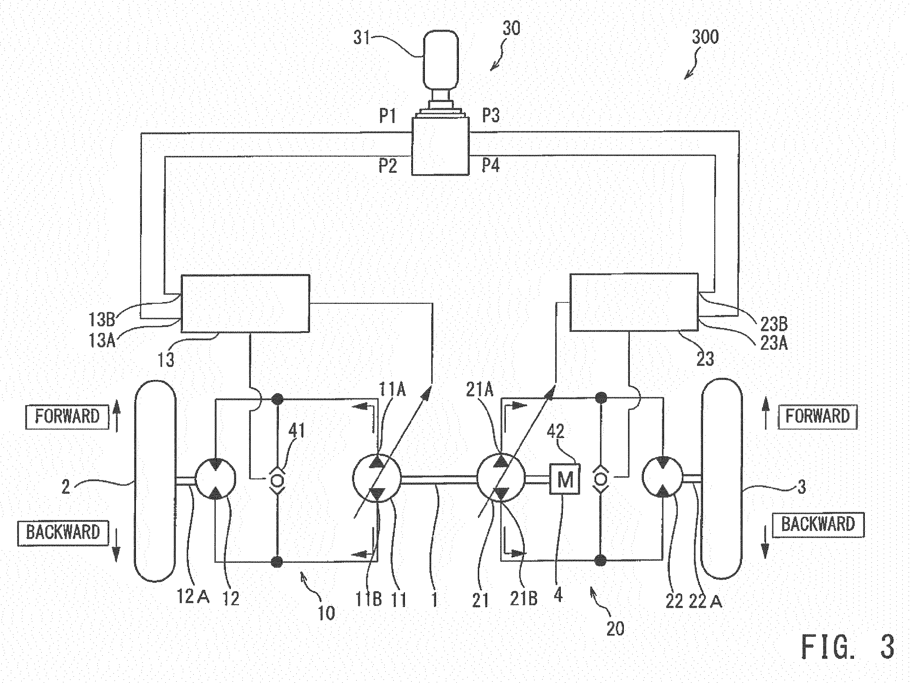

In order to facilitate understanding of the hydraulic drive system 100, a hydraulic drive system 300 serving as a comparative example will be described with reference to Fig. 3.

As shown in Fig. 3, the hydraulic drive system 300 is different from the hydraulic drive system 100 in a point where a first power transmission unit 10, a second power transmission unit 20, and an operation unit 30 are provided but a first pressure adjusting unit 50, a second pressure adjusting unit 60, a signal pressure adjusting valve 44, and a pilot valve 43 are not provided.

In a first pump control unit 13 and a second pump control unit 23 of the hydraulic drive system 300, pressure reduction ratios are set in accordance with respective discharge pressures of a first hydraulic pump 11 and a second hydraulic pump 21.

In the hydraulic drive system 300, when a load is applied only to the left drive wheel 2, only the discharge pressure of the first hydraulic pump 11 is boosted and the discharge pressure of the second hydraulic pump 21 is not changed.

In this case, the discharge pressure of the first hydraulic pump 11 boosted in accordance with the load is guided to the first pump control unit 13. Thus, the first pump control unit 13 controls a swash plate angle of the first hydraulic pump 11 and decreases the discharge volume. Thereby, a flow rate of a working oil guided to a first hydraulic motor 12 is decreased. Thus, the rotation velocity of the left drive wheel 2 is decreased.

In the second hydraulic pump 21, there is no boosting of the discharge pressure by the load of the left drive wheel 2. Thus, the second pump control unit 23 does not control the discharge volume of the second hydraulic pump 21. That is, the rotation velocity of the right drive wheel 3 is maintained.

In such a way, in the hydraulic drive system 300, when the load is applied to one of the right and left drive wheels 2, 3, the discharge volume of only one of the first hydraulic pump 11 and the second hydraulic pump 21 is controlled, and the rotation velocity of one of the right and left drive wheels 2, 3 is decreased. Therefore, in the hydraulic drive system 300, there is a fear that even when the operation input by the worker is not changed, the rotation velocity ratio of the right and left drive wheels 2, 3 may be changed and a non-intentional operation of the vehicle, such as turning, may be generated.

Meanwhile, in the hydraulic drive system 100, in a case where the load is applied only to one of the right and left drive wheels 2, 3, for example, to the left drive wheel 2, only the discharge pressure of the first hydraulic pump 11 is boosted and the discharge pressure of the second hydraulic pump 21 is not changed as well as the hydraulic drive system 300. Even in this case, the pressure reduction ratio of the signal pressure adjusting valve 44 is set by the sum of the discharge pressures of the first hydraulic pump 11 and the second hydraulic pump 21. Thus, the signal pressure PS is adjusted in accordance with the load by the signal pressure adjusting valve 44. Since the signal pressure PS adjusted in accordance with the load is guided to the first command pressure adjusting valve 52 and the second command pressure adjusting valve 62, the control pressures P5 and the control pressure P6 respectively guided to the first pump control unit 13 and the second pump control unit 23 are also generated in accordance with the load. Therefore, the inclination angles of both the first hydraulic pump 11 and the second hydraulic pump 21 are adjusted in accordance with the load of one of the drive wheels, and the discharge volumes are decreased.

In such a way, in the hydraulic drive system 100, even in a case where the load is applied only to one of the right and left drive wheels 2,3, the signal pressure PS is generated in accordance with the load applied to one of the drive wheels, and the control pressure P5 and the control pressure P6 are respectively adjusted in accordance with the signal pressure PS. The control pressure P5 and the control pressure P6 adjusted in such a way are respectively inputted to the first pump control unit 13 and the second pump control unit 23. By the first pump control unit 13 and the second pump control unit 23, the discharge volumes of both the first hydraulic pump 11 and the second hydraulic pump 21 are respectively controlled in accordance with the load. Thereby, even in a case where the load is applied only to one of the right and left drive wheels 2, 3, the discharge volumes of both the first hydraulic pump 11 and the second hydraulic pump 21 are decreased at the same rate, and the rotation velocity ratio of the right and left drive wheels 2, 3 is maintained. In such a way, in the hydraulic drive system 100, while maintaining the rotation velocity ratio of the right and left drive wheels 2, 3, the discharge volumes of both the first hydraulic pump 11 and the second hydraulic pump 21 are respectively decreased. Thus, output control of suppressing the load of the engine 4 while maintaining the traveling operation of the vehicle can be performed. In other words, while maintaining the traveling operation of the vehicle in accordance with the operation input of the worker, the output control can be performed. Therefore, the load applied to the engine 4 can be suppressed, and generation of a traveling operation not intended by the worker can be prevented.

According to the above first embodiment, the following operations and effects are exerted.

In the hydraulic drive system 100, the first command pressures P1, P2 for commanding the first pump control unit 13 to control are adjusted to be the control pressure P5 by the signal pressure PS generated in accordance with the sum of the discharge pressures of the working oils respectively guided from the first hydraulic pump 11 and the second hydraulic pump 21. Similarly, the second command pressures P3, P4 for commanding the second pump control unit 23 to control are adjusted to be the control pressure P6 by the signal pressure PS generated in accordance with the sum of the discharge pressures of the working oils respectively guided from the first hydraulic pump 11 and the second hydraulic pump 21. When the loads are applied to the right and left drive wheels 2, 3, the discharge pressures of the first hydraulic pump 11 and the second hydraulic pump 21 are increased. Thus, the signal pressure PS is adjusted in accordance with the increased discharge pressures by the signal pressure generating unit 40. In such a way, the first command pressures P1, P2 and the second command pressures P3, P4 for commanding the control by the first pump control unit 13 and the second pump control unit 23 are adjusted in accordance with the increased discharge pressures. Thus, the loads applied to the first hydraulic pump 11 and the second hydraulic pump 21 are suppressed. Therefore, the load applied to the engine 4 can be suppressed.

In the hydraulic drive system 100, even in a case where the load is applied only to one of the right and left drive wheels 2, 3, the control pressure P5 and the control pressure P6 adjusted in accordance with the signal pressure PS which is generated in accordance with the load are respectively inputted to the first pump control unit 13 and the second pump control unit 23. Therefore, even in a case where the load is applied only to one of the right and left drive wheels 2, 3, the discharge volumes of both the first hydraulic pump 11 and the second hydraulic pump 21 are decreased at the same rate, and the rotation velocity ratio of the right and left drive wheels 2, 3 is maintained. In such a way, while maintaining the rotation velocity ratio of the right and left drive wheels 2, 3, the discharge volumes of both the first hydraulic pump 11 and the second hydraulic pump 21 are decreased. Thus, while maintaining the traveling action of the vehicle, the output control of suppressing the load of the engine 4 can be performed. Therefore, the load applied to the engine 4 can be suppressed, and the generation of the traveling operation not intended by the worker can be prevented.

### (Second Embodiment)

Next, the hydraulic drive system 200 according to a second embodiment of the present invention will be described. Hereinafter, points different from the above first embodiment will mainly be described and the same configurations as those of the hydraulic drive system 100 of the above first embodiment will be given the same reference signs and description thereof will be omitted.

In the first embodiment, the first pressure adjusting unit 50 and the second pressure adjusting unit 60 include the first command pressure selecting valve 51 and the second command pressure selecting valve 61 configured to respectively select the higher pressures from the first command pressures P1, P2 and the second command pressures P3, P4 outputted from the operation unit 30. The higher command pressures are selected by the first command pressure selecting valve 51 and the second command pressure selecting valve 61, and the higher pressures of the first command pressures P1, P2 and the second command pressures P3, P4 are respectively guided to the first command pressure adjusting valve 52 and the second command pressure adjusting valve 62.

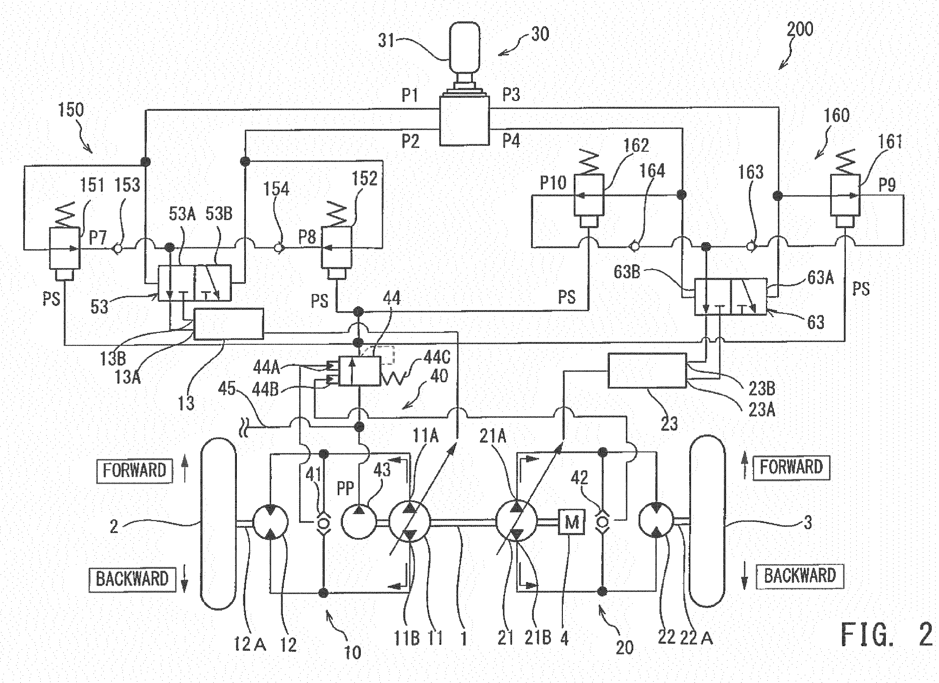

Meanwhile, as shown in Fig. 2, a first pressure adjusting unit 150 of the hydraulic drive system 200 has a third command pressure adjusting valve 151 configured to adjust a first command pressure P1 which is one of two first command pressures P1, P2 in accordance with a signal pressure PS, a fourth command pressure adjusting valve 152 configured to adjust the first command pressure P2 which is the other of the two first command pressures P1, P2 in accordance with the signal pressure PS, a first check valve 153 provided between the third command pressure adjusting valve 151 and a first pump control unit 13, the first check valve 153 being configured to guide a pressure only from the third command pressure adjusting valve 151 to the first pump control unit 13, and a second check valve 154 provided between the fourth command pressure adjusting valve 152 and the first pump control unit 13, the second check valve 154 being configured to guide a pressure only from the fourth command pressure adjusting valve 152 to the first pump control unit 13. A second pressure adjusting unit 160 of the hydraulic drive system 200 has a fifth command pressure adjusting valve 161 configured to adjust a second command pressure P3 which is one of two second command pressures P3, P4 in accordance with the signal pressure PS, a sixth command pressure adjusting valve 162 configured to adjust the second command pressure P4 which is the other of the two second command pressures P3, P4 in accordance with the signal pressure PS, a third check valve 163 provided between the fifth command pressure adjusting valve 161 and a second pump control unit 23, the third check valve 163 being configured to guide a pressure only from the fifth command pressure adjusting valve 161 to the second pump control unit 23, and a fourth check valve 164 provided between the sixth command pressure adjusting valve 162 and the second pump control unit 23, the fourth check valve 164 being configured to guide a pressure only from the sixth command pressure adjusting valve 162 to the second pump control unit 23. The hydraulic drive system 200 is different from the hydraulic drive system 100 in such points.

In a case where a control pressure P8 adjusted by the fourth command pressure adjusting valve 152 is larger than a control pressure P7 adjusted by the third command pressure adjusting valve 151, the first check valve 153 is closed by the control pressure P8 to prevent guiding of the control pressure P7 to the first pump control unit 13. In a case where the control pressure P7 is larger than the control pressure P8, the first check valve 153 is opened by the control pressure P7 to allow the guiding of the control pressure P7 to the first pump control unit 13. In such a way, the first check valve 153 guides the pressure only from the third command pressure adjusting valve 151 to the first pump control unit 13.

In a case where the control pressure P7 is larger than the control pressure P8, the second check valve 154 is closed by the control pressure P7 to prevent guiding of the control pressure P8 to the first pump control unit 13. In a case where the control pressure P8 is larger than the control pressure P7, the second check valve 154 is opened by the control pressure P8 to allow the guiding of the control pressure P8 to the first pump control unit 13. In such a way, the second check valve 154 guides the pressure only from the fourth command pressure adjusting valve 152 to the first pump control unit 13.

In a case where a control pressure P10 adjusted by the sixth command pressure adjusting valve 162 is larger than a control pressure P9 adjusted by the fifth command pressure adjusting valve 161, the third check valve 163 is closed by the control pressure P10 to prevent guiding of the control pressure P9 to the second pump control unit 23. In a case where the control pressure P9 is larger than the control pressure P10, the third check valve 163 is opened by the control pressure P9 to allow the guiding of the control pressure P9 to the second pump control unit 23. In such a way, the third check valve 163 guides the pressure only from the fifth command pressure adjusting valve 161 to the second pump control unit 23.

In a case where the control pressure P9 is larger than the control pressure P10, the fourth check valve 164 is closed by the control pressure P9 to prevent guiding of the control pressure P10 to the second pump control unit 23. In a case where the control pressure P10 is larger than the control pressure P9, the fourth check valve 164 is opened by the control pressure P10 to allow the guiding of the control pressure P10 to the second pump control unit 23. In such a way, the fourth check valve 164 guides the pressure only from the sixth command pressure adjusting valve 162 to the second pump control unit 23.

In the hydraulic drive system 200, the signal pressure PS generated by the signal pressure adjusting valve 44 is branched into four and respectively guided to the third command pressure adjusting valve 151, the fourth command pressure adjusting valve 152, the fifth command pressure adjusting valve 161, and the sixth command pressure adjusting valve 162 as a pilot pressure to set the pressure reduction ratios. The third command pressure adjusting valve 151, the fourth command pressure adjusting valve 152, the fifth command pressure adjusting valve 161, and the sixth command pressure adjusting valve 162 are respectively pressure reduction valves similar to the first command pressure adjusting valve 52 and the second command pressure adjusting valve 62 of the hydraulic drive system 100.

The first command pressure P1, which is one of the two first command pressure P1, P2 outputted from the operation unit 30 for commanding control of the left drive wheel 2, is guided to the third command pressure adjusting valve 151 and also guided to a first switching valve 53 as a pilot pressure. The first command pressure P2 which is the other of the two first command pressure P1, P2, is guided to the fourth command pressure adjusting valve 152 and also guided to the first switching valve 53 as a pilot pressure. A position of the first switching valve 53 is switched by a pressure difference between the first command pressure P1 and the first command pressure P2.

The second command pressure P3, which is one of the second command pressure P3, P4 outputted from the operation unit 30 for commanding control of the right drive wheel 3, is guided to the fifth command pressure adjusting valve 161 and also guided to a second switching valve 63 as a pilot pressure. The second command pressure P4, which is the other of the second command pressure P3, P4, is guided to the sixth command pressure adjusting valve 162 and also guided to the second switching valve 63 as a pilot pressure. A position of the second switching valve 63 is switched by a pressure difference between the second command pressure P3 and the second command pressure P4.

In the hydraulic drive system 200, the configurations and the operations thereof are the same between the first pressure adjusting unit 150 and the second pressure adjusting unit 160. Therefore, hereinafter, the first pressure adjusting unit 150 will be mainly and specifically described and description of the second pressure adjusting unit 160 will be omitted.

In the hydraulic drive system 200, the first command pressure P1 is adjusted to be the control pressure P7 by the third command pressure adjusting valve 151 whose pressure reduction ratio is set by the signal pressure PS. Similarly, the command pressure P2 is adjusted to be the control pressure P8 by the fourth command pressure adjusting valve 152 whose pressure reduction ratio is set by the signal pressure PS.

In a case where the control pressure P7 is larger than the control pressure P8, the first check valve 153 is opened by a pressure difference between the control pressure P7 and the control pressure P8, and the second check valve 154 is closed. Therefore, the control pressure P7 is guided to the first switching valve 53 as an input pressure. In a case where the control pressure P7 is larger than the control pressure P8, that is, in a case where the first command pressure P1 is larger than the first command pressure P2, the first switching valve 53 is switched to a first position 53A. Therefore, the control pressure P7 is guided to a first forward rotation port 13A of the first pump control unit 13.

In a case where the control pressure P8 is larger than the control pressure P7, the second check valve 154 is opened by the pressure difference between the control pressure P7 and the control pressure P8, and the first check valve 153 is closed. Therefore, the control pressure P8 is guided to the first switching valve 53 as an input pressure. In a case where the control pressure P8 is larger than the control pressure P7, that is, in a case where the first command pressure P2 is larger than the first command pressure P1, the first switching valve 53 is switched to a second position 53B. Therefore, the control pressure P8 is guided to a first backward rotation port 13B of the first pump control unit 13.

In such a way, in the hydraulic drive system 200, the higher pressure is selected from the control pressure P7 made by adjusting the first command pressure P1 by the third command pressure adjusting valve 151 and the control pressure P8 made by adjusting the first command pressure P2 the fourth command pressure adjusting valve 152, and the control pressure P7 or the control pressure P8 is guided to the first pump control unit 13. Therefore, according to the above second embodiment, the operations and the effects similar to the above first embodiment are exerted.

Next, a modified example of the hydraulic drive system 200 will be described.

In the hydraulic drive system 200, the first switching valve 53 is provided between the first pump control unit 13 and the first pressure adjusting unit 150, and the second switching valve 63 is provided between the second pump control unit 23 and the second pressure adjusting unit 160. The first check valve 153 and the second check valve 154 are respectively provided between the third command pressure adjusting valve 151 and the first switching valve 53 and between the fourth command pressure adjusting valve 152 and the first switching valve 53. The third check valve 163 and the fourth check valve 164 are respectively provided between the fifth command pressure adjusting valve 161 and the second switching valve 63 and between the sixth command pressure adjusting valve 162 and the second switching valve 63.

Instead of this, the hydraulic drive system 200 may have no first switching valve 53, no first check valve 153, and no second check valve 154. The hydraulic drive system 200 may also have no second switching valve 63, no third check valve 163, and no fourth check valve 164. That is, the control pressure P7 adjusted by the third command pressure adjusting valve 151 may be directly guided to the first forward rotation port 13A of the first pump control unit 13, and the control pressure P8 adjusted by the fourth command pressure adjusting valve 152 may be directly guided to the first backward rotation port 13B of the first pump control unit 13. In the hydraulic drive system 200, the control pressure P9 adjusted by the fifth command pressure adjusting valve 161 may be directly guided to the second forward rotation port 23A of the second pump control unit 23, and the control pressure P10 adjusted by the sixth command pressure adjusting valve 162 may be directly guided to the second backward rotation port 23B of the second pump control unit 23.

In this case, in a case where one of the command pressure P1 and the command pressure P2 is outputted as zero, the first pump control unit 13 controls the discharge direction and the discharge volume of the first hydraulic pump 11 in accordance with the magnitude of the control pressure P7 or the control pressure P8. Similarly, in a case where one of the command pressure P3 and the command pressure P4 is outputted as zero, the second pump control unit 23 controls the discharge direction and the discharge volume of the second hydraulic pump 21 in accordance with the magnitude of the control pressure P9 or the control pressure P10.

In a case where both the command pressure P1 and the command pressure P2 are outputted as pressures lager than zero, the first pump control unit 13 controls the discharge direction and the discharge volume of the first hydraulic pump 11 in accordance with the pressure difference between the control pressure P7 and the control pressure P8. Similarly, in a case where both the command pressure P3 and the command pressure P4 are outputted as pressures lager than zero, the second pump control unit 23 controls the discharge direction and the discharge volume of the second hydraulic pump 21 in accordance with the pressure difference between the control pressure P9 and the control pressure P10.

Even in such a case, the effects similar to the above second embodiment are exerted.

Hereinafter, the configurations, the operations, and the effects about the embodiments will be described.

The hydraulic drive system 100, 200 includes the first hydraulic pump 11 and the second hydraulic pump 21 to be driven by the power of the engine 4, the hydraulic pumps being capable of changing the discharge volumes and the discharge directions of the working oils, the first hydraulic motor 12 to be driven by the working oil discharged from the first hydraulic pump 11, the first hydraulic motor being configured to transmit the power to the left drive wheel 2 of the right and left drive wheels 2, 3, the second hydraulic motor 22 to be driven by the working oil discharged from the second hydraulic pump 21, the second hydraulic motor being configured to transmit the power to the right drive wheel 3 of the right and left drive wheels 2,3, the first pump control unit 13 configured to control the discharge volume and the discharge direction of the first hydraulic pump 11 in accordance with the first command pressures P1, P2 generated in accordance with the operation of the worker, the second pump control unit 23 configured to control the discharge volume and the discharge direction of the second hydraulic pump 21 in accordance with the second command pressures P3, P4 generated in accordance with the operation of the worker, the signal pressure generating unit 40 configured to generate the signal pressure PS for adjusting the first command pressures P1, P2 and the second command pressures P3, P4 in accordance with the sum of the discharge pressures of the working oils respectively discharged from the first hydraulic pump 11 and the second hydraulic pump 21, the first pressure adjusting unit 50, 150 configured to adjust the first command pressures P1, P2 in accordance with the signal pressure PS generated by the signal pressure generating unit 40, and the second pressure adjusting unit 60, 160 configured to adjust the second command pressures P3, P4 in accordance with the signal pressure PS generated by the signal pressure generating unit 40.

In the hydraulic drive system 100, 200, the first command pressures P1, P2 and the second command pressures P3, P4 for commanding the first pump control unit 13 and the second pump control unit 23 to control are adjusted by the signal pressure PS generated in accordance with the sum of the discharge pressures of the working oils respectively guided from the first hydraulic pump 11 and the second hydraulic pump 21. When the loads are added to the right and left drive wheels 2, 3, the discharge pressures of the first hydraulic pump 11 and the second hydraulic pump 21 are increased. Thus, the signal pressure PS is generated in accordance with the increased discharge pressures by the signal pressure generating unit 40. In such a way, the first command pressures P1, P2 and the second command pressures P3, P4 for commanding the control by the first pump control unit 13 and the second pump control unit 23 are adjusted in accordance with the increased discharge pressures. Thus, the loads applied to the first hydraulic pump 11 and the second hydraulic pump 21 are suppressed.

Therefore, according to the hydraulic drive system 100, 200, the load applied to the engine 4 can be suppressed.

In the hydraulic drive system 100, the two first command pressures P1, P2 are allowed to be inputted to the first pressure adjusting unit 50 in two lines, the two second command pressures P3, P4 are allowed to be inputted to the second pressure adjusting unit 60 in two lines, the first pressure adjusting unit 50 has the first command pressure selecting valve 51 configured to select the higher one from the two inputted first command pressures P1, P2, and the first command pressure adjusting valve 52 configured to adjust the higher first command pressure P1 or the higher first command pressure P2 selected by the first command pressure selecting valve 51 in accordance with the signal pressure PS and to guide the adjusted higher first command pressure to the first pump control unit 13, and the second pressure adjusting unit 60 has the second command pressure selecting valve 61 configured to select the higher one from the two inputted second command pressures P3, P4, and the second command pressure adjusting valve 62 configured to adjust the higher second command pressure P3 or the higher second command pressure P4 selected by the second command pressure selecting valve 61 in accordance with the signal pressure PS and to guide the adjusted higher second command pressure to the second pump control unit 23.

In the hydraulic drive system 100, the first command pressures P1, P2 and the second command pressures P3, P4 for commanding the first pump control unit 13 and the second pump control unit 23 to control are respectively guided to the first command pressure adjusting valve 52 and the second command pressure adjusting valve 62 by selecting the higher pressures from the two first command pressures P1, P2 and the two second command pressures P3, P4 by the first command pressure selecting valve 51 and the second command pressure selecting valve 61. The first command pressures P1, P2 and the second command pressures P3, P4 guided to the first command pressure adjusting valve 52 and the second command pressure adjusting valve 62 are adjusted by the signal pressure PS generated in accordance with the sum of the discharge pressures of the working oils respectively guided from the first hydraulic pump 11 and the second hydraulic pump 21. When the loads are added to the right and left drive wheels 2,3, the loads are added to the first hydraulic pump 11 and the second hydraulic pump 21 and the discharge pressures are increased. Thus, the signal pressure PS is generated in accordance with the increased discharge pressures by the signal pressure adjusting valve 44. Therefore, the first command pressures P1, P2 and the second command pressures P3, P4 for commanding the control by the first pump control unit 13 and the second pump control unit 23 are adjusted in accordance with the increased discharge pressures. Thus, the loads applied to the first hydraulic pump 11 and the second hydraulic pump 21 are suppressed.

Therefore, according to the hydraulic drive system 100, the load applied to the engine 4 can be suppressed.

In the hydraulic drive system 200, the two first command pressures P1, P2 are allowed to be inputted to the first pressure adjusting unit 150, the two second command pressures P3, P4 are allowed to be inputted to the second pressure adjusting unit 160, the first pressure adjusting unit 150 has the third command pressure adjusting valve 151 configured to adjust one of the two first command pressures P1, P2 in accordance with the signal pressure PS, the fourth command pressure adjusting valve 152 configured to adjust the other of the two first command pressures P1, P2 in accordance with the signal pressure PS, the first check valve 153 provided between the third command pressure adjusting valve 151 and the first pump control unit 13, the first check valve being configured to guide the pressure only from the third command pressure adjusting valve 151 to the first pump control unit 13, and the second check valve 154 provided between the fourth command pressure adjusting valve 152 and the first pump control unit 13, the second check valve being configured to guide the pressure only from the fourth command pressure adjusting valve 152 to the first pump control unit 13, and the second pressure adjusting unit 160 has the fifth command pressure adjusting valve 161 configured to adjust one of the two second command pressures P3, P4 in accordance with the signal pressure PS, the sixth command pressure adjusting valve 162 configured to adjust the other of the two second command pressures P3, P4 in accordance with the signal pressure PS, the third check valve 163 provided between the fifth command pressure adjusting valve 161 and the second pump control unit 23, the third check valve being configured to guide the pressure only from the fifth command pressure adjusting valve 161 to the second pump control unit 23, and the fourth check valve 164 provided between the sixth command pressure adjusting valve 162 and the second pump control unit 23, the fourth check valve being configured to guide the pressure only from the sixth command pressure adjusting valve 162 to the second pump control unit 23.

In the hydraulic drive system 200, the first command pressures P1, P2 for commanding the first pump control unit 13 to control are respectively guided to the third command pressure adjusting valve 151 and the fourth command pressure adjusting valve 152, and the second command pressures P3, P4 for commanding the second pump control unit 23 to control are respectively guided to the fifth command pressure adjusting valve 161 and the sixth command pressure adjusting valve 162. The first command pressures P1, P2 and the second command pressures P3, P4 guided to the third command pressure adjusting valve 151, the fourth command pressure adjusting valve 152, the fifth command pressure adjusting valve 161, and the sixth command pressure adjusting valve 162 are adjusted by the signal pressure PS generated in accordance with the sum of the discharge pressures of the first hydraulic pump 11 and the second hydraulic pump 21. The higher command pressure of the control pressure P7 and the control pressure P8 respectively adjusted by the third command pressure adjusting valve 151 and the fourth command pressure adjusting valve 152 is guided to the first pump control unit 13 by the first check valve 153 or the second check valve 154. The higher command pressure of the control pressure P9 and the control pressure P10 respectively adjusted by the fifth command pressure adjusting valve 161 and the sixth command pressure adjusting valve 162 is guided to the second pump control unit 23 by the third check valve 163 or the fourth check valve 164. When the loads are added to the right and left drive wheels 2, 3, the loads are added to the first hydraulic pump 11 and the second hydraulic pump 21 and the discharge pressures are increased. Thus, the signal pressure PS is generated in accordance with the increased discharge pressures by the signal pressure adjusting valve 44. Therefore, the first command pressures P1, P2 and the second command pressures P3, P4 for commanding the control by the first pump control unit 13 and the second pump control unit 23 are adjusted in accordance with the increased discharge pressures. Thus, the loads applied to the first hydraulic pump 11 and the second hydraulic pump 21 are suppressed.

Therefore, according to the hydraulic drive system 200, the load applied to the engine 4 can be suppressed.

In the hydraulic drive system 100, 200, the first pump control unit 13 has the first forward rotation port 13A configured to control the discharge direction of the first hydraulic pump 11 to one discharge direction upon input of the pressure, and the first backward rotation port 13B configured to control the discharge direction of the first hydraulic pump 11 to the other discharge direction upon input of the pressure, the second pump control unit 23 has the second forward rotation port 23A configured to control the discharge direction of the second hydraulic pump 21 to one discharge direction upon input of the pressure, and the second backward rotation port 23B configured to control the discharge direction of the second hydraulic pump 21 to the other discharge direction upon input of the pressure, the first switching valve 53 configured to selectively switch between guiding of the pressure to the first forward rotation port 13A of the first pump control unit 13 and guiding of the pressure to the first backward rotation port 13B of the first pump control unit 13 is provided between the first pump control unit 13 and the first pressure adjusting unit 50, 150, the second switching valve 63 configured to selectively switch between guiding of the pressure to the second forward rotation port 23A of the second pump control unit 23 and guiding of the pressure to the second backward rotation port 23B of the second pump control unit 23 is provided between the second pump control unit 23 and the second pressure adjusting unit 60, 160, one of the two first command pressures P1, P2 is the first forward rotation command pressure to switch the first switching valve 53 in such a manner that the pressure is inputted to the first forward rotation port 13A of the first pump control unit 13, and the other is the first backward rotation command pressure to switch the first switching valve 53 in such a manner that the pressure is inputted to the first backward rotation port 13B of the first pump control unit 13, and one of the two second command pressures P3, P4 is the second forward rotation command pressure to switch the second switching valve 63 in such a manner that the pressure is inputted to the second forward rotation port 23A of the second pump control unit 23, and the other is the second backward rotation command pressure to switch the second switching valve 63 in such a manner that the pressure is inputted to the second backward rotation port 23B of the second pump control unit 23.

In the hydraulic drive system 100, 200, the first command pressures P1, P2 and the second command pressures P3, P4 for commanding the first pump control unit 13 and the second pump control unit 23 to control are adjusted by the signal pressure PS generated in accordance with the sum of the discharge pressures of the first hydraulic pump 11 and the second hydraulic pump 21. The adjusted first command pressures P1, P2 and the adjusted second command pressures P3, P4 are respectively guided to the first and second forward rotation ports 13A, 23A or the first and second backward rotation ports 13B, 23B of the first pump control unit 13 and the second pump control unit 23 through the first switching valve 53 and the second switching valve 63. The first switching valve 53 is actuated by the first forward rotation command pressure and the first backward rotation command pressure, and the second switching valve 63 is actuated by the second forward rotation command pressure and the second backward rotation command pressure. When the loads are added to the right and left drive wheels 2, 3, the loads are added to the first hydraulic pump 11 and the second hydraulic pump 21 and the discharge pressures are increased. Thus, the signal pressure PS is generated in accordance with the increased discharge pressures by the signal pressure adjusting valve 44. Therefore, the first command pressures P1, P2 and the second command pressures P3, P4 for commanding the control by the first pump control unit 13 and the second pump control unit 23 are adjusted in accordance with the increased discharge pressures. Thus, the loads applied to the first hydraulic pump 11 and the second hydraulic pump 21 are suppressed.

Therefore, according to the hydraulic drive system 100, 200, the load applied to the engine 4 can be suppressed.

The embodiments of the present invention are described above. However, the above embodiments only show a part of application examples of the present invention and do not intend to limit the technical scope of the present invention to the specific configurations of the above embodiments.

The hydraulic drive system 100 is not limited to the working vehicle but may be mounted in other vehicles as long as right and left drive wheels are independently controlled.

The present application claims priority on the basis of Japanese Patent Application No. 2014-143485 filed to the JPO on July 11, 2014. All the contents of this application are incorporated in the present specification by reference.

## Claims

1. A liquid pressure drive system, comprising:
a first liquid pressure pump and a second liquid pressure pump configured to be driven by power of a drive source, each of the first and second liquid pressure pumps being capable of changing a discharge volume and a discharge direction of a working liquid;
a first liquid pressure motor configured to be driven by the working liquid discharged from the first liquid pressure pump, the first liquid pressure motor being configured to transmit the power to one of right and left drive wheels;
a second liquid pressure motor configured to be driven by the working liquid discharged from the second liquid pressure pump, the second liquid pressure motor being configured to transmit the power to the other of the right and left drive wheels;
a first pump control unit configured to control the discharge volume and the discharge direction of the first liquid pressure pump in accordance with a first command pressure, the first command pressure being generated in response to an operation of a worker;
a second pump control unit configured to control the discharge volume and the discharge direction of the second liquid pressure pump in accordance with a second command pressure, the second command pressure being generated in response to an operation of the worker;
a signal pressure generating unit configured to generate the signal pressure for adjusting the first command pressure and the second command pressure in accordance with a sum of discharge pressures of the first liquid pressure pump and the second liquid pressure pump;
a first pressure adjusting unit configured to adjust the first command pressure in accordance with the signal pressure generated by the signal pressure generating unit; and
a second pressure adjusting unit configured to adjust the second command pressure in accordance with the signal pressure generated by the signal pressure generating unit.

2. The liquid pressure drive system according to claim 1,
wherein two first command pressures are allowed to be inputted to the first pressure adjusting unit,
wherein two second command pressures are allowed to be inputted to the second pressure adjusting unit,
wherein the first pressure adjusting unit includes:
a first higher pressure selecting valve configured to select higher one from the two inputted first command pressures; and
a first command pressure adjusting valve configured to adjust the higher first command pressure selected by the first higher pressure selecting valve in accordance with the signal pressure and to guide the adjusted higher first command pressure to the first pump control unit, and
wherein the second pressure adjusting unit includes:
a second higher pressure selecting valve configured to select higher one from the two inputted second command pressures; and
a second command pressure adjusting valve configured to adjust the higher second command pressure selected by the second higher pressure selecting valve in accordance with the signal pressure and to guide the adjusted higher second command pressure to the second pump control unit.

3. The liquid pressure drive system according to claim 1,
wherein two first command pressures are allowed to be inputted to the first pressure adjusting unit,
wherein two second command pressures are allowed to be inputted to the second pressure adjusting unit,
the first pressure adjusting unit includes:
a third command pressure adjusting valve configured to adjust one of the two first command pressures in accordance with the signal pressure;
a fourth command pressure adjusting valve configured to adjust the other of the two first command pressures in accordance with the signal pressure;
a first check valve provided between the third command pressure adjusting valve and the first pump control unit, the first check valve being configured to guide the pressure only from the third command pressure adjusting valve to the first pump control unit; and
a second check valve provided between the fourth command pressure adjusting valve and the first pump control unit, the second check valve being configured to guide the pressure only from the fourth command pressure adjusting valve to the first pump control unit, and wherein the second pressure adjusting unit includes:
a fifth command pressure adjusting valve configured to adjust one of the two second command pressures in accordance with the signal pressure;
a sixth command pressure adjusting valve configured to adjust the other of the two second command pressures in accordance with the signal pressure;
a third check valve provided between the fifth command pressure adjusting valve and the second pump control unit, the third check valve being configured to guide the pressure only from the fifth command pressure adjusting valve to the second pump control unit; and
a fourth check valve provided between the sixth command pressure adjusting valve and the second pump control unit, the fourth check valve being configured to guide the pressure only from the sixth command pressure adjusting valve to the second pump control unit.

4. The liquid pressure drive system according to claim 2,
wherein the first pump control unit includes:
a first forward rotation port configured to control the discharge direction of the first liquid pressure pump to one discharge direction when the pressure is inputted to the first forward rotation port, and
a first backward rotation port configured to control the discharge direction of the first liquid pressure pump to the other discharge direction when the pressure is inputted to the first backward rotation port, wherein the second pump control unit has:
a second forward rotation port configured to control the discharge direction of the second liquid pressure pump to one discharge direction when the pressure is inputted to the second forward rotation port, and
a second backward rotation port configured to control the discharge direction of the second liquid pressure pump to the other discharge direction when the pressure is inputted to the second backward rotation port,
wherein a first switching valve configured to selectively switch between guiding of the pressure to the first forward rotation port of the first pump control unit and guiding of the pressure to the first backward rotation port of the first pump control unit is provided between the first pump control unit and the first pressure adjusting unit,
wherein a second switching valve configured to selectively switch between guiding of the pressure to the second forward rotation port of the second pump control unit and guiding of the pressure to the second backward rotation port of the second pump control unit is provided between the second pump control unit and the second pressure adjusting unit,
wherein one of the two first command pressures is a first forward rotation command pressure to switch the first switching valve in such a manner that the pressure is inputted to the first forward rotation port of the first pump control unit, and the other is a first backward rotation command pressure to switch the first switching valve in such a manner that the pressure is inputted to the first backward rotation port of the first pump control unit, and
wherein one of the two second command pressures is a second forward rotation command pressure to switch the second switching valve in such a manner that the pressure is inputted to the second forward rotation port of the second pump control unit, and the other is a second backward rotation command pressure to switch the second switching valve in such a manner that the pressure is inputted to the second backward rotation port of the second pump control unit.
